# EUROPEAN PATENT SPECIFICATION

(11) **EP 0 609 185 B1**
(45) Date of publication and mention of the grant of the patent: **02.06.1999**
(21) Application number: 94830025.6
(22) Date of filing: 26.01.1994
(51) Int. Cl.: A01D 34/68

(54) **Transmission reduction assembly for self-propelling rotary mowing machines**
Untersetzungsgetriebe für selbstangetriebene Rasenmäher
Transmission réductrice pour tondeuse autopropulseur

(30) Priority: 26.01.1993 IT MI930056 U
(43) Date of publication of application: 03.08.1994
(73) Proprietor: HARRY S.p.A., I-20062 Cassano D'Adda (IT)
(72) Inventor: Soldavini, Teodoro, c/o Harry S.p.A., I-20062 Cassano D'Adda (Milano) (IT)
(74) Representative: Cicogna, Franco

(56) References cited:
- GB-A- 2 013 467
- US-A- 2 941 610
- US-A- 4 466 233

## Description

### BACKGROUND OF THE INVENTION

The present invention relates to an improved transmission reduction assembly, which has been particulary designed for application to self-propelling rotary mowing machines.

As is known, there are broadly used rotary mowing machines for the maintenance of grass soil both of private buildings and of public areas.

Such a rotary grass mowing machine conventionally comprises a machine casing which supports, at the centre portion thereof, a driving engine, usually of the internal combustion type, having a vertically extending shaft and which casing fully encompasses a rotaty blade which is applied at the bottom portion of the driving shaft.

The casing comprises moreover a rear region therefrom the cut grass is ejected by the grass cutting blade directly into a suitable rear vessel.

In order to allow the grass mowing machine to be easily driven on the soil, to the casing there are conventionally applied two front wheels and two rear wheels, which are mutually coaxial and can be adjusted in height, so as to adjust the grass cutting height.

The machine is controlled and pushed by means of a handelbar usually applied at the rear portion of the mowing machine.

The continuous increase of the grass surfaces to be cut and the frequency of the grass cutting operations on the grassy soil, in order to provide it with a good aesthetic aspect, have caused a great increase on the requirements of self-propelling rotary mowing machine, that is those mowing machines which can be driven by exploiting the power of the driving engine in order to drive, under the control of an operator, a pair of wheels.

The rotary mowing machine engine comprises, as stated, a shaft which can rotate about a vertical axis, that is an axis which is perpendicular to the soil.

On this shaft there is mounted the rotary blade, which must turn in a plane parallel to the soil, that is about an axis perpendicular to the soil.

The mowing machine wheels, on the other hand, turn about an axis which is parallel to the soil; accordingly, the driving power transmitted by the engine to the wheels must be subjected to a rotation of the rotary axis through 90°.

Moreover, the RPM's of the engine, usually of about 3000 RPM's, must be greatly reduced, since the wheel, in order to transmit to the mowing machine a displacement speed which can be accepted by the operator, must turn at a speed of about 100 RPM's.

Accordingly, as stated, the transmission ratio must be greatly reduced and the rotary axis must be rotated through 90°.

This result can be achieved by a transmission assembly including a helical gear wheel and a worm screw, but, because of the comparatively high value of the input RPM's, it would be more suitable to provide the reduction gear inside a suitably lubricated gear box.

As stated, the driving of the driving wheels by the motor must be controlled by the operator, who must decide, as the engine operates, if the mowing machine must be caused to move forward, under the force of the driving wheels.

This operation, on the other hand, is rather difficult, since the prior art mowing machines have a comparatively high weight, due to the constructional complexity of the reducing assemblies installed thereon.

The document GB-A-2013467 discloses an improved speed reducing assembly for a self-propelled lawn-mower having the features of the preamble of the main claim.

### SUMMARY OF THE INVENTION

Accordingly, the aim of the present invention is to overcome the above disclosed drawbacks, by providing an improved reduction assembly, specifically designed for application to self-propelling rotary mowing machines, which is adapted to engage or disengage the transmission of the rotary motion from the engine to the wheels, thereby providing a mowing machine which can be easily controlled by an operator.

Within the scope of the above mentioned aim, a main object of the present invention is to provide such a transmission assembly which is very reliable and safe in operation, can be made by using easily available elements and materials and which, moreover, is very competitive from a mere economic stand-point.

According to one aspect of the present invention, the above mentioned aim and objects, as well as yet other objects, which will become more apparent hereinafter, are achieved by an improved transmission reduction assembly, for a self-propelled lawn-mower having the features of the characterizing part of the main claim.

### BRIEF DESCRIPTION OF THE DRAWINGS

Fur̂ther characteristics and advantages of the invention will become more apparent hereinafter, from the detailed disclosure of a preferred, though not exclusive, embodiment of an improved transmission reduction assembly, specifically designed for application to self-propelling rotary mowing machines, which is illustrated, by way of an indicative but not limitative example, in the figures of the accompanying drawings, where:

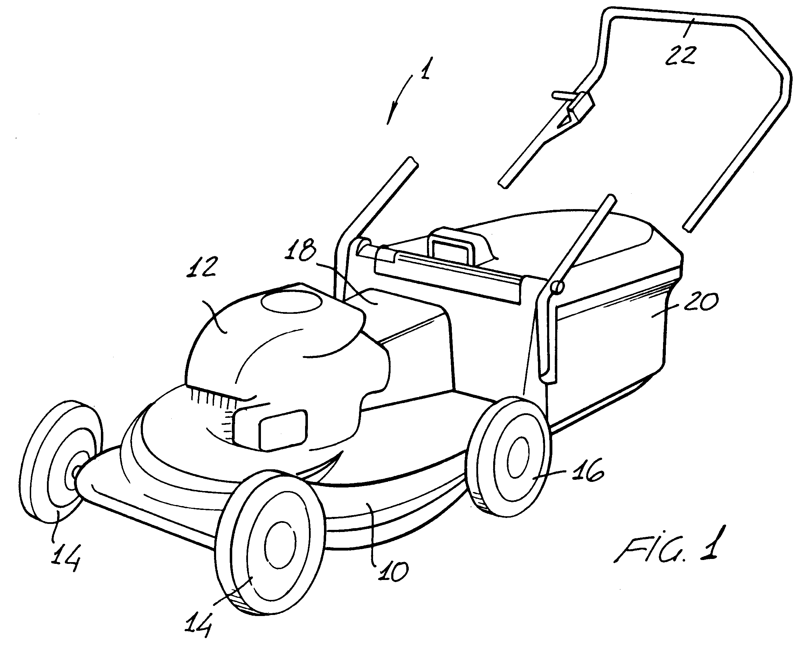

Figure 1 is a perspective view illustrating the main components of a rotary mowing machine;
Figure 2 is a cross-sectional view illustrating the connection between the mowing machine engine and transmission and the inlet section of the transmission;
Figure 3 is another cross-sectional view illustraing a first embodiment of the transmission reducing assembly according to the present inventtion; and
Figure 4 is yet another cross-sectional view illustrating a second embodiment of the transmission reducing assembly according to the invention.

### DESCRIPTION OF THE PREFERRED EMBODIMENT

With reference to the number references of the above mentioned figures, the improved transmission reducing assembly, which has been specifically designed for application to self-propelling rotary mowing machines, according to the present invention, and which has been generally indicated at the reference number 1, comprises a casing 10 on which there is mounted an engine 12, usually an internal combustion engine, which includes a downwardly extending vertical shaft, provided for mounting thereon component elements for the operation of the mowing machine.

The casing 10 is supported by two front wheels 14, which are coaxially arranged with respect to one another, and by two coaxial rear wheels 16.

The casing 10 is designed with a low profile so as to fully enclose therein a grass cutting blade.

Usually this casing will include a duct 18 for ejecting therefrom the cut grass.

Moreover, at the grass outlet duct 18,to the carter there is usually applied a cut grass collecting basket 20.

The casing 10 supports furthermore, at the rear portion thereof, a handlebar 22 for allowing an operator to guide and control the mowing machine during the operation thereof.

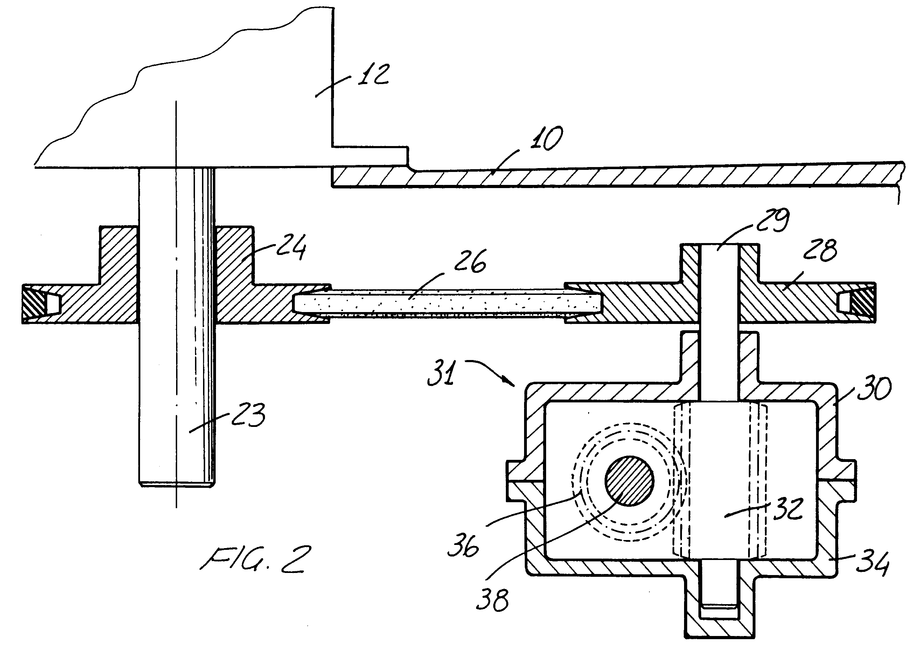

As is shown in figure 2, the driving shaft indicated at 23, which constitutes the bottom vertical portion of the engine, held in the casing 10, supports a pulley 24 which, through a belt 26, preferably of trapezoidal cross-section, causes a further pulley 28 to turn.

The above mentioned pulley is usually mounted on a shaft 29 projecting from the top portion 30 of the transmission box or casing 31, and which constitutes the top end portion of a worm screw 32.

This worm screw includes furthermore a rotary bottom end portion, engaged with a suitable engaging seat formed on the bottom portion 34 of the transmission box 31.

The worm screw 32 engages or connects with a helical gear wheel 36 which is mounted on a low speed shaft 32 parallel to the axis of the driving wheels of the mowing machine and, accordingly, to the soil.

The above disclosed elements are provided for performing two very important functions: that of transforming the rotaty motion perpendicular to the soil into a rotary motion parallel to said soil, and that of reducing the comparatively high RPM's of the engine.

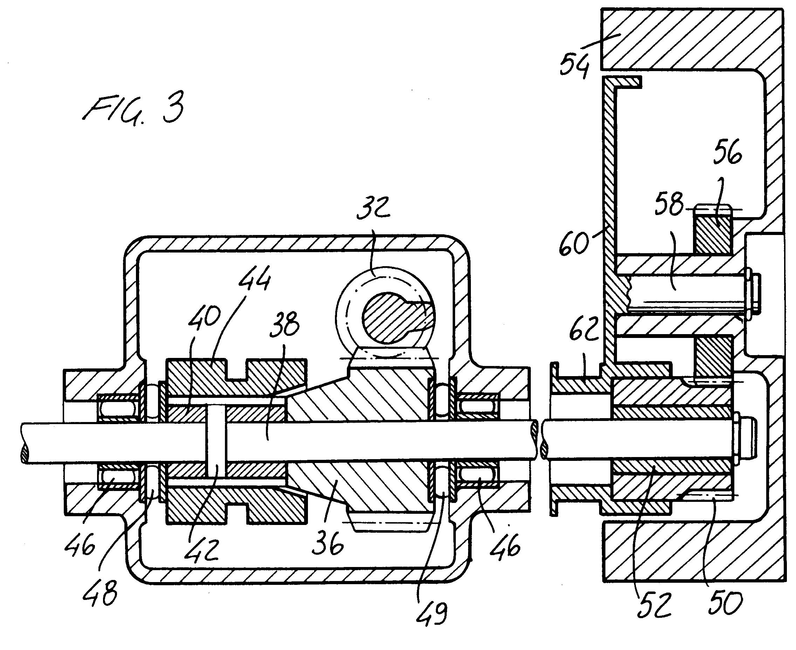

Figure 3 illustrates a first manner for performing the engaging and disengaging of the motion transmission, from the engine to the wheels, by means of a bevel clutch element.

In this first operation manner, an engaging cone or bevel element projects from the helical gear wheel 36.

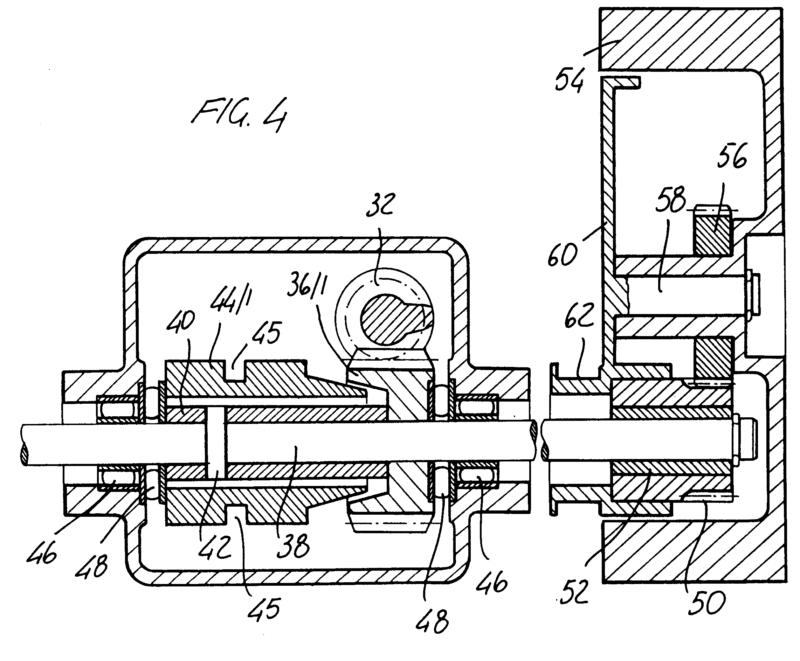

In figure 4, on the other hand, there is shown a second embodiment for engaging and disengaging the motion transmission, from the engine to the wheel, by means of a bevel clutch, the engaging cone element of which can be withdrawn in the helical gear wheel 36.

From an examination of figures 3 and 4, it would be apparent that the helical gear wheel 36 can freely turn on the low speed shaft 38.

With the low speed shaft 38, moreover, there is made rigid a sleeve 40, which is rigidly or fixedly connected by means of a radially extending pin element 42.

As operated, the sleeve 40 will cause a further sleeve 44 to turn, this sleeve 44 being however able of being axially displaced along the axis of the shaft 38.

More specifically, the sleeve 44 is provided, at one end thereof adjoining the helical gear wheel 36, with a bevel portion which can be mated with the bevel portion of the helical gear wheel 36.

Thus, as the two cone elements of the components 36 and 44 are detached, or disengaged, as shown in figures 3 and 4, no rotary motion is transmitted from the helical gear wheel 36 to the slow speed horizontal shaft 38.

On the other hand, as the two above mentioned cone elements are pressed to contact one another, a rotary motion will be transmitted to the low speed shafts 38.

In order to allow the sleeve 44 to be axially displaced, which displacement, through suitable controls, is controlled by the mowing machine operator, said sleeve will be provided with a specifically designed outer contour and, for example, as shown in figures 3 and 4, it will comprise an annular groove 45 in which can be engaged a suitable lever.

In this connection it should be apparent that the radial loads and axial stresses must be supported by suitable radial bearings 46 as well as axial bearings 48.

The low speed shaft 38 will drive the wheels 54, preferably through a pair of gears, which, at first, are specifically designed to provide a further reduction of the revolution number.

Moreover, as the wheel 54 is displaced away from the axis of the low speed shaft, then this wheel can be easily displaced, with respect to the mowing machine casing, and this in order to properly adjust the cutting height of the grass.

The coupling of the low speed shaft 38 and of the two pinions 50 mounted at the end portions of said shaft, will be so designed as to allow one of the two gears to not operate or transmit power to its wheel as the operator must steer the mowing machine on a bend.

The mentioned coupling will be also provided for disengaging the connection of the low speed shaft 38 and the two mentioned pinions, as the operator must cause the mowing machine to be reversely displaced.

In figures 3 and 4, the connection between the low speed shafts 38 and the two end pinions 50 is indicated by the feature 52.

The rotary motion will be transmitted to the wheels 54 through the gear 56 rigid with said wheels.

In particular, the drawing wheels 54 are free of rotating on the pin element 58 which is rigid with the plate 60 which in turn can be rotated on its hub 62 coaxial with the low speed shaft 38 as it is required to adjust the cutting height of the mowing machine.

Figure 4 shows an embodiment similar to that of figure 3, the sole difference being that the taperings of the helical gear wheel 36 and sleeve 44 are reversed, and this without any prejudice for the operation of the mowing machine.

From the above disclosure it should be apparent that the invention fully achieves the intended aim and objects.

## Claims

1. An improved speed reducing assembly for a self-propelled lawn-mower, said speed reducing assembly being arranged to be driven by a comparatively high-speed engine of said lawn-mower which then drives with a comparatively low speed a slow speed shaft (38) of said speed reducing assembly, said slow speed shaft (38) being arranged to rotatively drive wheels (54) of said lawn-mower, said speed reducing assembly including a worm-screw (32) driven by said engine and meshing with a helical gear wheel (36) freely rotatively supported on said slow speed shaft (38), a first sleeve member (40) fixedly mounted on said slow speed shaft (38) and a second sleeve member (44) coaxially encompassing said first sleeve member, said second sleeve member (44) being rotatively rigid with said first sleeve member (40) and being adapted to reciprocately slide thereon, characterized in that said helical gear wheel (36) and said second sleeve (44) define thereon respective integral conical profile mating portions, the conical profile portion of said helical gear wheel (36) being an integral projecting or a recessed conical profile portion and the conical profile portion of said second sleeve (44) being an integral recessed or a projecting conical profile portion, thereby, as said second sleeve (44) is axially displaced on said slow speed shaft (38) toward said helical gear wheel, said integral conical profile portions thereof are so mated to provide a substantially rigid gradual motion transmitting coupling between said helical gear wheel (36) and said first sleeve member, thereby causing said slow speed shaft (38) to turn with a comparatively slow speed, and that said speed reducing assembly comprises moreover connection means (52) between said slow speed shaft (38) and two pinions (50) mounted on end portions of said slow speed shaft (38), said slow speed shaft (38) further driving a pair of power transmitting gears (56).

2. A transmission reducing assembly, according to Claim 1, characterized in that said second sleeve (44) is provided, on the outside thereof, with an annular groove (45) therein a lever is engaged.

3. A transmission reducing assembly, according to Claim 1, characterized in that said assembly is arranged inside a lubricated transmission box supported by a casing (10).

4. A transmission reducing assembly, according to Claim 3, characterized in that on said casing (10) there is mounted an internal combustion engine (12) having a downwardly extending vertical shaft.

5. A transmission reducing assembly, according to Claim 3, characterized in that said casing (10) is supported by two coaxial front wheels (14) and two coaxial rear wheels (16).

6. A transmission reducing assembly, according to Claim 3, characterized in that said casing (10) is so arranged as to fully encompass a grass cutting blade and being provided with a cut grass ejecting duct (18) to which there is connected a cut grass collecting basket (20).

7. A transmission reducing assembly, according to Claim 3, characterized in that a handlebar (22) is fixed at the rear portion of said casing (10).

8. A transmission reducing assembly, according to one or more of the preceding claims, characterized in that the driving shaft (23), which is the bottom vertical portion of said engine, held in said casing (10) supports a first pulley (24) which, through a trapezoidal belt (26) causes a second pulley (28) to turn.

9. A transmission reducing assembly, according to Claim 7, characterized in that said second pulley (28) is mounted on a shaft (29) projecting from the top portion (30) of the transmission box (31) and constituting the top portion of said worm screw (32).

10. A transmission reducing assembly, according to Claim 9, characterized in that said worm screw (32) has a bottom rotary end portion engaged in a seat formed on the bottom portion (34) of said transmission box (31).

11. A transmission reducing assembly, according to one or more of the preceding claims, characterized in that said assembly further comprises radial and axial bearings (46, 48) keyed on said slow speed shaft (38).

12. A transmission reducing assembly, according to one or more of the preceding claims, characterized in that the rotary motion is transmitted to said wheels (54) through a gear (56) rigid with said wheels (54).

13. A transmission reducing assembly, according to one or more of the preceding claims, characterized in that said driving wheels (54) are free of rotating on a pin (58) rigid with a plate (60) which can turn about a hub (62) coaxial with said slow speed shaft (38).

## Patentansprüche

1. Ein verbessertes Untersetzungsgetriebe für einen Rasenmäher mit Eigenantrieb, wobei dieses Untersetzungsgetriebe so angeordnet ist, daß es von einem Motor mit einer vergleichsweise hohen Drehzahl dieses Rasenmähers angetrieben wird, der dann eine Niedergeschwindigkeitswelle (38) dieses Untersetzungsgetriebes mit einer vergleichsweise niedrigen Drehzahl in Drehung versetzt, wobei diese Niedergeschwindigkeitswelle (38) so angeordnet ist, daß sie die Antriebsräder (54) dieses Rasenmähers antreibt, wobei dieses Untersetzungsgetriebe eine Antriebsschnecke (32) umfaßt, die von diesem Motor angetrieben wird und ein Schraubgetrieberad (36) kämmt, das freilaufend auf dieser Niedergeschwindigkeitswelle (38) getragen wird, wobei eine erste Laufbuchse (40) fest auf dieser ersten Niedergeschwindigkeitswelle (38) montiert ist und eine zweite Laufbuchse (44) koaxial diese erste Laufbuchse umschließt, wobei diese zweite Laufbuchse (44) drehfest mit dieser ersten Laufbuchse (40) und angepaßt ist, darauf hin und her zu gleiten, dadurch gekennzeichnet, daß dieses Schraubgetrieberad (36) und diese zweite Laufbuchse (44) jeweilige konische, aufeinander abgestimmte Profilbereiche aufweisen, wobei der konische Profilbereich dieses Schraubgetrieberades (36) ein daraus geformter hervorstehender oder eingelassener, konischer Profilbereich und der konische Profilbereich dieser zweiten Laufbuchse (44) ein daraus geformter eingelassener oder hervorstehender, konischer Profilbereich ist, wodurch bei der axialen Verschiebung dieser zweiten Laufbuchse (44) auf dieser Niedergeschwindigkeitswelle (38) gegen dieses Schraubgetrieberad diese daraus geformten Profilbereiche so aufeinander abgestimmt sind, daß sie eine im wesentlichen drehsteife, stufenweise, kraftübertragende Kupplung zwischen diesem Schraubgetrieberad (36) und dieser ersten Laufbuchse liefern ,wodurch diese Niedergeschwindigkeitswelle (38) zur Drehung mit einer vergleichsweise geringen Drehzahl veranlaßt wird, und daß dieses Untersetzungsgetriebe ferner eine Verbindungsvorrichtung (52) zwischen dieser Niedergeschwindigkeitswelle (38) und zwei Ritzeln (50) aufweist, die auf den Endbereichen dieser Niedergeschwindigkeitswelle (38) befestigt sind, wobei diese Niedergeschwindigkeitswelle (38) zudem ein Paar von kraftübertragenden Ritzen (56) antreibt.

2. Ein Untersetzungsgetriebe nach Anspruch 1, dadurch gekennzeichnet, daß diese zweite Laufbuchse (44) auf ihrer Außenseite mit einer ringförmigen Vertiefung (45) ausgestattet ist, in die ein Hebel eingreift.

3. Ein Untersetzungsgetriebe nach Anspruch 1, dadurch gekennzeichnet, daß diese Vorrichtung in einem geschmierten Getriebegehäuse untergebracht ist, das seinerseits von einem Gehäuse (10) getragen wird.

4. Ein Untersetzungsgetriebe nach Anspruch 3, dadurch gekennzeichnet, daß auf diesem Gehäuse (10) ein Verbrennungsmotor (12) angebracht ist, der eine nach unten verlaufende, senkrechte Abtriebswelle besitzt.

5. Ein Untersetzungsgetriebe nach Anspruch 3, dadurch gekennzeichnet, daß dieses Gehäuse (10) von zwei koaxialen Vorderrädern (14) und zwei koaxialen Hinterrädern (16) getragen wird.

6. Ein Untersetzungsgetriebe nach Anspruch 3, dadurch gekennzeichnet, daß dieses Gehäuse (10) so angeordnet ist, daß es vollständig ein Grasschneidmesser umschließt, und daß es mit einem Entladeschacht (18) für das geschnittene Gras ausgestattet ist, an dem ein Sammelbehälter (20) für das geschnittene Gras angeschlossen ist.

7. Ein Untersetzungsgetriebe nach Anspruch 3, dadurch gekennzeichnet, daß am hinteren Bereich dieses Gehäuses (10) eine Griffstange (22) befestigt ist.

8. Ein Untersetzungsgetriebe nach einem oder mehreren der vorhergehenden Ansprüche, dadurch gekennzeichnet, daß die in diesem Gehäuse (10) untergebrachte Antriebswelle (23), die den unteren, vertikalen Bereich dieses Motors darstellt, eine erste Riemenscheibe (24) trägt, die über einen im Querschnitt trapezoidalen Riemen (26) eine zweite Riemenscheibe (28) zum Drehen veranlaßt.

9. Ein Untersetzungsgetriebe nach Anspruch 7, dadurch gekennzeichnet, daß diese zweite Riemenscheibe (28) auf einer Welle (29) befestigt ist, die vom oberen Bereich (30) des Getriebegehäuses (31) absteht und den oberen Bereich dieserAntriebsschnecke (32) darstellt.

10. Ein Untersetzungsgetriebe nach Anspruch 9, dadurch gekennzeichnet, daß diese Antriebsschnecke (32) ein unteres, drehbares Ende besitzt, das in einer im unteren Bereich (34) dieses Getriebegehäuses (31) gebildeten Aufnahme sitzt.

11. Ein Untersetzungsgetriebe nach einem oder mehreren der vorhergehenden Ansprüche, dadurch gekennzeichnet, daß diese Vorrichtung ferner Radial- und Axiallager (46, 48) umfaßt, die auf dieser Niedergeschwindigkeitswelle (38) verkeilt sind.

12. Ein Untersetzungsgetriebe nach einem oder mehreren der vorhergehenden Ansprüche, dadurch gekennzeichnet, daß die Drehbewegung auf diese Räder (54) über ein mit diesen Rädern (54) drehfestes Getrieberad (56) übertragen wird.

13. Ein Untersetzungsgetriebe nach einem oder mehreren der vorhergehenden Ansprüche, dadurch gekennzeichnet, daß diese Antriebsräder (54) auf einem Stift (58) frei drehen können, der drehfest bezüglich einer Scheibe (60) ist, die um eine koaxial zu dieser Niedergeschwindigkeitswelle (38) verlaufenden Nabe (62) drehen kann.

## Revendications

1. Assemblage reducteur de vitesse amélioré pour tondeuse autotractée, ledit assemblage réducteur de vitesse étant conçu pour être entraîné par un moteur de vitesse relativement élevée de ladite tondeuse, qui entraine alors avec une vitesse relativement faible un arbre d'entrainement à vitesse lente 38 dudit assemblage de réducteur de vitesse, ledit arbre d'entrainement à vitesse lente 38 étant disposé pour entraîner en rotation des roues 54 de ladite tondeuse, ledit assemblage réducteur de vitesse comprenant un tire-bourre (worm-screw) 32 entraîné par ledit moteur et entrant en prise avec une roue d'engrenage hélicoïdale 36 supportée de manière à tourner librement sur ledit arbre à vitesse lente 38, un premier élément d'enveloppe 40 monté de manière fixe sur ledit arbre à vitesse lente 38 et un second élément d'enveloppe 44 entourant coaxialement ledit premier élément d'enveloppe, ledit second élément d'enveloppe 44 étant monté fixe en rotation avec ledit premier élément d'enveloppe 40 et étant adapté pour glisser ou coulisser réciproquemen sur celui-ci , **caractérisé en ce que** ladite roue d'engrenage hélicoïdale 36 et ladite seconde enveloppe 44 définissent l'une sur l'autre des zones de contact à profile conique intégrales correspondantes, la zone à profil conique de ladite roue d'engrenage hélicoïdale 36 étant une zone à profil conique intégrale en retrait ou faisant saillie et la zone à profil conique de ladite seconde enveloppe 44 étant une zone faisant saillie ou en retrait à profil conique intégral, de cette façon, comme ladite seconde enveloppe 44 est déplacée axialement sur ledit arbre d'entraînement à vitesse lente 38 de ladite roue d'engrenage hélicoïdale, leurs dites zones à profil conique sont mises en contact de façon à fournir un couplage de transmission d'un mouvement progressif sensiblement rigide entre ladite roue d'engrenage hélicoïdale 36 et ledit premier élément d'enveloppe, entrainat ainsi la rotation dudit axe d'entraînement à vitesse lente 38 avec une vitesse relativement lente, ledit assemblage de réduction de vitesse comprenant en outre des moyens de connexion 52 entre ledit arbre d'entraînement à vitesse lente 38 et deux pignons 50 montés sur les extrémités dudit arbre d'entraînement à vitesse lente 38, ledit arbre d'entraînement à vitesse lente 38 entraînant en outre une paire de roues transmettant la puissance 56.

2. Assemblage réducteur de transmission selon la revendication 1, **caractérisé en ce que** ladite seconde enveloppe 44 est munie, sur sa partie externe, d'une rainure annulaire 45 à l'intérieur de laquelle un levier est engagé.

3. Assemblage réducteur de transmission selon la revendication 1, **caractérisé en ce que** ledit assemblage est diposé à l'intérieur d'une boîte de transmission lubrifiée supportée par une coque ou enveloppe 10.

4. Assemblage réducteur de transmission selon la revendication 3, **caractérisé en ce que** sur ladite coque ou enveloppe 10 est monté un moteur à combustion interne 12 présentant un axe d'entraînement vertical qui s'étend vers le bas.

5. Assemblage réducteur de transmission selon la revendication 3, **caractérisé en ce que** ladite coque ou enveloppe 10 est supportée par deux roues avant coaxiales 14 et deux roues arrières coaxiales 16.

6. Assemblage réducteur de transmission, selon la revendication 3, **caractérisé en ce que** ladite coque 10 est disposée de sorte qu'elle entoure complètement une lame de coupe de l'herbe et étant munie avec un conduit d'éjection de l'herbe coupée 18 auquel est relié un panier de collecte de l'herbe coupée.

7. Assemblage réducteur de transmission selon la revendication 3, **caractérisé en ce qu**'un guidon ou barre de manipulation 22 est fixé à la partie arrière de ladite coque ou enveloppe 10.

8. Assemblage réducteur de transmission selon une ou plusieurs des revendications précédentes, **caractérisé en ce que** l'arbre d'entraînement 23, qui est la partie verticale inférieure dudit moteur, maintenu dans ladite enveloppe supporte une première poulie 24 qui, par l'intermédiaire d'une courroie trapézoïdale 26 provoque la rotation d'une seconde poulie 28.

9. Assemblage réducteur de transmission selon la revendication 7, **caractérisé en ce que** ladite seconde poulie 28 est montée sur un arbre 29 faisant saillie à partir du dessus 30 de la boîte de transmission 31 et constituant la partie haute dudit tire-bourre 32.

10. Assemblage réducteur de transmission selon la revendication 9, **caractérisé en ce que** le tire-bourre (worm-screw) 32 présente une extrémité rotative inférieur engagée dans une cavité formée sur la partie basale ou inférieure 34 de ladite boîte de transmission 31.

11. Assemblage réducteur de transmission selon une ou plusieurs des revendications précédentes, **caractérisé en ce que** ledit assemblage comprend en outre des supports radiaux et axiaux 46, 48 coincés ou clavetés sur ledit arbre d'entraînement à vitesse lente 38.

12. Assemblage démultiplicateur de transmission selon une ou plusieurs des revendications précédentes, **caractérisé en ce que** le mouvement de rotation est transmis auxdites roues 54 par l'intermédiaire d'un engrenage 56 solidaire desdites roues 54.

13. Assemblage réducteur de transmission selon une ou plusieurs des précédentes revendications, **caractérisé en ce que** lesdites roues d'entrainement 54 sont libres de tourner sur une tige 58 solidaire d'un plateau 60 qui peut tourner autour d'un moyeu 62 coaxial avec ledit arbre d'entraînement à vitesse lente 38.
